# EUROPÄISCHE PATENTSCHRIFT

(11) **EP 2 988 038 B1**
(45) Veröffentlichungstag und Bekanntmachung des Hinweises auf die Patenterteilung: **11.12.2019**
(21) Anmeldenummer: 15176018.8
(22) Anmeldetag: 09.07.2015
(51) Int. Cl.: F16K 1/52, F16K 31/06, F02M 21/02

(54) **ELEKTROMAGNETISCH BETÄTIGBARES VENTIL ZUM EINDOSIEREN EINES GASES SOWIE VERFAHREN ZUR HERSTELLUNG EINES SOLCHEN VENTILS**
ELECTROMAGNETICALLY ACTUATED VALVE FOR METERING A GAS AND METHOD FOR PRODUCING SUCH A VALVE
SOUPAPE ACTIONNEE DE MANIERE ELECTROMAGNETIQUE DESTINEE AU DOSAGE DE GAZ ET PROCEDE DE FABRICATION D'UNE TELLE SOUPAPE

(30) Priorität: 19.08.2014 DE 102014216443
(43) Veröffentlichungstag der Anmeldung: 24.02.2016
(73) Patentinhaber: ROBERT BOSCH GMBH, 70442 Stuttgart (DE)
(72) Erfinder: Hawa, Niki, 4073 Wilhering (AT); Hainberger, Martin, 4020 Linz (AT); Mitter, Roland, 4201 Gramastetten (AT); Minixhofer, Claus, 4101 Feldkirchen (AT); Simmerer, Juergen, 4492 Hofkirchen im Traunkreis (AT)

(56) Entgegenhaltungen:
- WO-A1-03/054436
- JP-A- S59 219 586
- US-A- 4 697 608
- US-A1- 2012 168 656

## Beschreibung

Die Erfindung betrifft ein elektromagnetisch betätigbares Ventil zum Eindosieren eines Gases, insbesondere zum Eindosieren eines gasförmigen Brennstoffs in einen Ansaugtrakt einer Verbrennungskraftmaschine. Ferner betrifft die Erfindung ein Verfahren zur Herstellung eines solchen Ventils.

### Stand der Technik

Ventile der vorstehend genannten Art werden beispielsweise zur Versorgung einer Verbrennungskraftmaschine mit einem gasförmigen Brennstoff eingesetzt. Die Applikation erfolgt im Bereich der Fahrzeugtechnik, zum Beispiel zur Brennstoffversorgung von Gas- oder Gas-Diesel-Motoren in Personenkraft- oder Nutzfahrzeugen, in Schienenfahrzeugen und/oder auf Schiffen. Auf Schiffen werden oft so genannte Dual Fuel Motoren eingesetzt, die wahlweise mit Gas oder Marinediesel bzw. Schweröl betrieben werden können. Im Gasbetrieb werden in der Regel kleine Mengen Flüssigbrennstoff zur Zündung eingespritzt. Ferner werden derartige Motoren in Anlagen zur Energiegewinnung und/oder Energieerzeugung eingesetzt. Die Baugröße bzw. Zylinderleistung solcher Motoren kann dabei deutlich variieren, was wiederum Einfluss auf die Dimensionierung des Ventils hat.

Bei Großmotoren finden in der Regel Ventile mit großen Öffnungsquerschnitten Verwendung, um die erforderliche Brennstoffversorgung sicherzustellen. Zur Realisierung eines Massenstroms von beispielsweise 1.000 kg/h bedarf es eines Öffnungsquerschnitts, der mehrere Hundert mm² betragen kann. Dies gelingt nur mit entsprechend groß dimensionierten Ventilen. Mit der Baugröße der Ventile nehmen jedoch ferner die fertigungs- und/oder montagebedingten Toleranzen und Streuungen zu, die den Gasdurchfluss bei geöffnetem Ventil in unzulässiger Weise verändern können. Die Anforderungen im Hinblick auf Toleranzen und Streuungen steigen stetig und sind oftmals nur mit unverhältnismäßig großem Aufwand zu erfüllen.

Ferner müssen für die unterschiedlichen Applikationen eine Vielzahl an Gasdosierventilen bereit gehalten werden, um den jeweiligen Anforderungen an den Massenstrom gerecht zu werden.

Aus der US 2012/168656 A1 ist ein Magnetventil bekannt, wobei der Gasdurchfluss über einen Magnetanker und einen Regler gesteuert werden kann. In der US 4 697 608 A wird ebenfalls ein elektromagnetisch betriebenes Einlassventil beschrieben, welches als Arbeitsmedium Wasser verwendet.

Aus der WO 03/054436 A1 ist eine Vorrichtung zur Regelung und Stabilisierung der Strömung eines Fluids, insbesondere für den Einsatz in Magnetventilen bekannt. Aus der JP S59 219586 A ist ebenso ein in diesem Fall Gas regulierendes Magnetventil bekannt.

Aus der Offenlegungsschrift DE 103 60 253 A1 ist ein Ventil zum Steuern eines Fluids, insbesondere eines Gases, bekannt, das einfach und kostengünstig herstellbar ist und eine Einstellung eines durch das Ventil strömenden Massenstroms mittels einer Abströmöffnungen aufweisenden Lochscheibe ermöglicht. Da der Massenstrom durch die Anzahl der Abströmöffnungen und deren Querschnitte bestimmt wird, muss bei sich ändernden Anforderungen hinsichtlich des Massenstroms lediglich eine andere Lochscheibe eingelegt werden. Auf diese Weise lässt sich mit im Wesentlichen gleichen Bauteilen eine Vielzahl unterschiedlicher Ventil-Typen oder Ventil-Baureihen realisieren. Es müssen lediglich unterschiedliche Lochscheiben vorgehalten werden, die bei der Montage des Ventils in den stets gleichen Grundkörper eingesetzt werden.

Die Einstellung des Gasdurchflusses mittels einer in das Ventil eingesetzten Lochscheibe weist jedoch den Nachteil auf, dass fertigungs- und/oder montagebedingte Toleranzen, die den Massenstrom beeinflussen, keine Berücksichtigung finden. Das heißt, dass Abweichungen auftreten können, die nicht mehr hinnehmbar sind. Dies gilt insbesondere dann, wenn es sich um ein entsprechend groß dimensioniertes Ventil handelt.

Um etwaige Abweichungen festzustellen, kann das Ventil nach der Montage vermessen werden. Zeigen die Messwerte unzulässige Abweichungen in Bezug auf einen vorgegebenen Zielwert an, kann das Ventil demontiert und beispielsweise eine andere Lochscheibe eingesetzt werden. Dadurch steigen jedoch der Herstellungsaufwand und die Herstellungskosten.

Der vorliegenden Erfindung liegt die Aufgabe zugrunde, ein Ventil zum Eindosieren eines Gases anzugeben, das einfach und kostengünstig herstellbar ist und zugleich eine Einstellung des Gasdurchflusses auf einen vorgegebenen Zielwert unter Einhaltung enger Toleranzgrenzen ermöglicht. Die Einstellung des Gasdurchflusses soll insbesondere innerhalb einer Montagelinie erfolgen und keine Demontage bereits montierter Teile erfordern.

Zur Lösung der Aufgabe wird das Ventil mit den Merkmalen des Anspruchs 1 vorgeschlagen. Ferner wird ein Verfahren zur Herstellung eines solchen Ventils angegeben. Vorteilhafte Weiterbildungen der Erfindung sind den jeweiligen Unteransprüchen zu entnehmen.

### Offenbarung der Erfindung

Das zum Eindosieren eines Gases, insbesondere zum Eindosieren eines gasförmigen Brennstoffs in einen Ansaugtrakt einer Verbrennungskraftmaschine, vorgeschlagene elektromagnetisch betätigbare Ventil umfasst ein Ventilgehäuse, in dem ein mit einem hubbeweglichen Anker zusammenwirkender Elektromagnet zur Betätigung eines Ventilschließelements aufgenommen ist, über dessen Hubbewegung mindestens eine in einem Ventilsitzelement ausgebildete Durchströmöffnung steuerbar ist, die einen Zuströmbereich mit einem Abströmbereich verbindet. Erfindungsgemäß ist im Zuströmbereich mindestens ein durchflussbegrenzendes Bauteil eingesetzt, wobei das Ventil axial anströmbar ist und das mindestens eine durchflussbegrenzende Bauteil in dem Zuströmbereich stromaufwärts des Elektromagneten angeordnet ist.

Das durchflussbegrenzende Bauteil im Zuströmbereich besitzt eine drosselnde, d. h. eine den Massenstrom durch das Ventil verringernde Wirkung. Hierbei kann die drosselnde Wirkung derart festgelegt werden, dass der Massenstrom auf einen vorgegebenen Zielwert eingestellt wird. Der Zielwert kann sich aus dem jeweiligen Ventil-Typ oder der jeweiligen Ventil-Baureihe ergeben. Bei der Auswahl des mindestens einen durchflussbegrenzenden Bauteils kann eine vorab durch Vermessen des montierten Ventils ermittelte Durchflusskennlinie zugrunde gelegt werden. Auf diese Weise finden bei der Einstellung des Durchflusses bzw. Massenstroms auch fertigungs- und/oder montagebedingte Toleranzen Berücksichtigung. Das mindestens eine durchflussbegrenzende Bauteil wird dabei bevorzugt aus einer Vielzahl vorgefertigter und klassierter durchflussbegrenzender Bauteile ausgewählt.

Die Anordnung mindestens eines durchflussbegrenzenden Bauteils im Zuströmbereich des Ventils erlaubt die Einstellung des Massenstroms am Ende der Montagelinie, ohne das Ventil zuvor ganz oder teilweise zerlegen zu müssen. Dies gilt insbesondere, wenn der das Bauteil aufnehmende Zuströmbereich von außen zugänglich ist. Im Unterschied zum Stand der Technik erfordert demnach die Einstellung des Massenstroms keine Demontage des Ventils, so dass der Zeit- und Kostenaufwand bei der Herstellung des Ventils gering gehalten werden kann. Ferner können bei der Einstellung fertigungs- und/oder montagebedingte Toleranzen berücksichtigt werden, da die Entscheidung für mindestens ein durchflussbegrenzendes Bauteil bevorzugt erst am Ende der Montagelinie fällt.

Der das mindestens eine durchflussbegrenzende Bauteil aufnehmende Zuströmbereich wird vorzugsweise durch mindestens eine Ausnehmung im Ventilgehäuse ausgebildet. Die Ausnehmung ist weiterhin vorzugsweise als Bohrung ausgeführt oder einer Bohrung vorgelagert, die ebenfalls Teil des Zuströmbereichs ist. Die konkrete Ausgestaltung des Zuströmbereichs hängt insbesondere davon ab, ob es sich bei dem Ventil um ein axial oder ein radial anströmbares Ventil handelt.

Bei einem axial anströmbaren Ventil mit einem im Wesentlichen hohlzylinder- oder topfförmigen Ventilgehäuse kann der Zuströmbereich eine stirnseitige Ausnehmung umfassen, die mindestens einer axial und/oder schräg durch das Ventilgehäuse verlaufenden Bohrung vorgelagert ist.

Durch Einsetzen mindestens eines durchflussbegrenzenden Bauteils in den Zuströmbereich des Ventils kann eine Grobeinstellung und/oder eine Feineinstellung des Massenstroms vorgenommen werden. Beispielsweise kann erst eine Grobeinstellung erfolgen, auf welche dann eine Feineinstellung folgt.

Um zunächst eine Grobeinstellung und anschließend eine Feineinstellung vorzunehmen, können mehrere durchflussbegrenzende Bauteile nacheinander in den Zuströmbereich des Ventils eingesetzt werden. Die mehreren durchflussbegrenzenden Bauteile besitzen bevorzugt jeweils mindestens eine durchflussbegrenzende Durchströmöffnung, wobei sich weiterhin bevorzugt die Durchströmöffnungen der mehreren Bauteile hinsichtlich der Größe ihrer Strömungsquerschnitte unterscheiden. Zur Grobeinstellung kann dann ein erstes Bauteil mit einer vergleichsweise großen Durchströmöffnung in den Zuströmbereich eingesetzt werden, auf das dann zur Feineinstellung mindestens ein weiteres Bauteil mit einer demgegenüber kleineren Durchströmöffnung folgt, die in Überdeckung mit der Durchströmöffnung des vorangegangenen Bauteils gebracht wird. Der durchflussbegrenzende Strömungsquerschnitt wird dann durch das zuletzt eingesetzte Bauteil definiert.

Alternativ oder ergänzend können die mehreren durchflussbegrenzenden Bauteile derart in den Zuströmbereich des Ventils eingesetzt werden, dass ihre Durchströmöffnungen versetzt zueinander zu liegen kommen. In diesem Fall wird der durchflussbegrenzende Strömungsquerschnitt durch den gemeinsamen Überdeckungsbereich der versetzt zueinander liegenden Durchströmöffnungen definiert.

Eine Grob- und Feineinstellung des Durchflusses kann aber auch durch ein einziges durchflussbegrenzendes Bauteil bewirkt werden, wenn dieses beweglich im Zuströmbereich angeordnet ist.

In Weiterbildung der Erfindung wird daher vorgeschlagen, dass mindestens ein im Zuströmbereich eingesetztes durchflussbegrenzendes Bauteil beweglich, insbesondere drehbeweglich und/oder verschiebbar, gegenüber dem Ventilgehäuse und/oder einem weiteren durchflussbegrenzenden Bauteil gelagert ist. Über die Bewegung des Bauteils kann dann eine Verengung oder Erweiterung eines Strömungsquerschnitts im Zuströmbereich und/oder eine Änderung der Strömungsführung bewirkt werden.

In einer besonders vorteilhaften Ausgestaltung der Erfindung ermöglicht die vorgeschlagene bewegliche Lagerung des mindestens einen durchflussbegrenzenden Bauteils eine stufenlose Einstellung des Durchflusses bzw. Massenstroms. Bei mehreren durchflussbegrenzenden Bauteilen im Zuströmbereich ist zumindest ein Bauteil beweglich gelagert, um beispielsweise eine in diesem Bauteil ausgebildete Durchströmöffnung gegenüber einer Durchströmöffnung eines anderen Bauteils zu versetzen.

Idealerweise ist die Bewegung eines beweglich gelagerten durchflussbegrenzenden Bauteils von außen steuerbar, so dass zur Einstellung, insbesondere zur Feineinstellung, des Massenflusses das Ventil nicht demontiert werden muss.

Gemäß einer weiteren vorteilhaften Ausgestaltung der Erfindung ist mindestens ein im Zuströmbereich eingesetztes durchflussbegrenzendes Bauteil hülsen- oder scheibenförmig ausgebildet und besitzt mindestens eine durchflussbegrenzende Durchströmöffnung. Das heißt, dass die Durchströmöffnung des Bauteils den Strömungsquerschnitt des Zuströmbereichs verengt. Ist das Bauteil darüber hinaus beweglich, insbesondere drehbeweglich und/oder verschiebbar, gelagert, kann die Durchströmöffnung gegenüber einer Bohrung des Zuströmbereichs oder einer Durchströmöffnung eines weiteren im Zuströmbereich eingesetzten durchflussbegrenzenden Bauteils derart versetzt werden, dass sich ein veränderter Überdeckungsbereich ergibt, um beispielsweise eine Feineinstellung des Massenflusses vorzunehmen.

Das erfindungsgemäße Ventil ist axial anströmbar, wobei das mindestens eine durchflussbegrenzende Bauteil in dem Zuströmbereich stromaufwärts des Elektromagneten angeordnet ist. Der Zuströmbereich kann beispielsweise eine stirnseitige Ausnehmung im Ventilgehäuse umfassen, in welche das mindestens eine durchflussbegrenzende Bauteil eingesetzt ist. In diesem Fall ist das durchflussbegrenzende Bauteil vorzugsweise scheibenförmig ausgebildet und
besitzt mindestens eine durchflussbegrenzende Durchströmöffnung. Diese kann zentral oder exzentrisch angeordnet sein und grundsätzlich einen beliebigen Querschnitt besitzen. Um die Strömung durch den Querschnitt zu optimieren und/oder die Kosten zu senken, kann insbesondere ein kreisrunder Querschnitt gewählt werden. Denn ein kreisrunder Querschnitt lässt sich in einfacher Weise durch eine Bohrung im scheibenförmigen Bauteil realisieren. Ferner kann die Durchströmöffnung gasdynamisch wirksame Gestaltungsmerkmale, wie beispielsweise Einlauffasen, Verrundungen oder dergleichen, aufweisen.

Vorteilhafterweise ist das mindestens eine im Zuströmbereich eingesetzte durchflussbegrenzende Bauteil im Ventilgehäuse verliersicher gehalten. Hierzu kann beispielsweise das durchflussbegrenzende Bauteil kraft- und/oder formschlüssig mit dem Ventilgehäuse verbunden sein. Die kraft- und/oder formschlüssige Verbindung wird vorzugsweise über eine Schraub-, Klemm-, Press-, Steck-, und/oder Rastverbindung hergestellt, da der hierüber bewirkte Kraft- und/oder Formschluss weiterhin eine Verdrehung und/oder Verschiebung des Bauteils zulässt, um beispielsweise eine Feineinstellung des Massenstroms vorzunehmen. Ist eine bewegliche Lagerung des Bauteils nicht oder nicht mehr erwünscht, da beispielsweise die Feineinstellung bereits erfolgt ist, kann alternativ oder ergänzend eine Verbindung mittels Kleben oder stoffschlüssig durch Löten oder Schweißen hergestellt werden. Dadurch wird eine Lagefixierung des durchflussbegrenzenden Bauteils innerhalb des Ventilgehäuses bewirkt, die verhindert, dass sich die einmal vorgenommene Einstellung des Massenstroms ändert. Alternativ oder ergänzend können zur endgültigen Lagefixierung Fixiermittel, wie beispielsweise Schrauben oder Stifte, eingesetzt werden.

Eine stoffschlüssige Verbindung weist zudem den Vorteil auf, dass eine Leckage zwischen dem Bauteil und dem Ventilgehäuse sicher verhindert wird. Die gleiche Wirkung kann über eine Klebeverbindung erzielt werden.

Gemäß einer weiteren bevorzugten Ausführungsform der Erfindung sind - unabhängig von der Anströmrichtung des Ventils - mehrere durchflussbegrenzende Bauteile mit sich zumindest teilweise überdeckenden und/oder unterschiedlich großen Durchströmöffnungen in Strömungsrichtung des Gases hintereinander geschaltet. Auf diese Weise kann eine Feineinstellung des Massenstroms durch die Anzahl der durchflussbegrenzenden Bauteile und/oder deren Lage zueinander bewirkt werden. Die durchflussbegrenzenden Bauteile sind in diesem Fall bevorzugt jeweils scheibenförmig ausgebildet.

Des Weiteren wird vorgeschlagen, dass das Ventilsitzelement scheibenförmig ausgebildet ist und einen Flachsitz ausbildet. Bevorzugt weist das scheibenförmige Ventilsitzelement mehrere konzentrisch angeordnete, kreis- oder teilkreisförmige Durchströmöffnungen auf. Auf diese Weise lassen sich beispielsweise besonders große Öffnungsquerschnitte und in der Folge große Massenströme realisieren.

Alternativ oder ergänzend wird vorgeschlagen, dass das Ventilschließelement scheibenförmig ausgebildet ist und mehrere konzentrisch angeordnete, kreis- oder teilkreisförmig angeordnete Durchströmöffnungen besitzt, die durch Stege begrenzt werden, die Dichtflächen ausbilden, die in Überdeckung mit den Durchströmöffnungen des Ventilsitzelements bringbar sind.

Das ferner zur Lösung der eingangs genannten Aufgabe vorgeschlagene Verfahren zur Herstellung eines erfindungsgemäßen Ventils umfasst die Schritte:
- Montage des Ventils,
- Vermessung des Ventils unter definierten Bedingungen zur Erfassung des Durchflusses,
- Auswertung der Messdaten und
- Auswahl mindestens eines durchflussbegrenzenden Bauteils, das zur Einstellung des Durchflusses auf einen Sollwert in den Zuströmbereich des Ventils eingesetzt wird.

Das Verfahren ermöglicht die Einstellung des Durchflusses am Ende der Montagelinie, und zwar nachdem das montierte Ventil vermessen wurde. Auf diese Weise können bei der Einstellung des Durchflusses bzw. des Massenstroms etwaige fertigungs- und/oder montagebedingte Toleranzen berücksichtigt werden. Die Einstellung erfordert zudem keine vorhergehende Demontage bereits montierter Teile des Ventils, um Teile auszutauschen oder zu ergänzen, da die Anordnung des mindestens einen durchflussbegrenzenden Bauteils im Zuströmbereich des Ventils erfolgt.

Vorteilhafterweise umfasst die Montagelinie eine Messstrecke oder einen Prüfstand, so dass die vorgeschlagenen Verfahrensschritte weitgehend automatisiert durchgeführt werden können. Die Messstrecke bzw. der Prüfstand sollten ferner bevorzugt die automatisierte Ausgabe einer Dokumentation und/oder eines Prüfprotokolls ermöglichen.

Bevorzugt wird die Auswahl mindestens eines durchflussbegrenzenden Bauteils anhand zumindest einer vorab bestimmten Durchflusskennlinie und/oder aus einer Vielzahl vorgefertigter und klassierter Bauteile getroffen. Das Verfahren ermöglicht auf diese Weise eine reproduzierbare Einstellung bzw. Gleichstellung des Durchflusses für ein Ventil eines bestimmten Ventil-Typs oder einer bestimmten Ventil-Baureihe.

Weiterhin bevorzugt wird zur Grobeinstellung des Durchflusses mindestens ein durchflussbegrenzendes Bauteil in den Zuströmbereich des Ventils eingesetzt, das dann zur Feineinstellung des Durchflusses gegenüber dem Ventilgehäuse und/oder gegenüber einem weiteren durchflussbegrenzenden Bauteil bewegt, insbesondere verdreht und/oder verschoben, wird. Über die Verdrehung und/oder Verschiebung des durchflussbegrenzenden Bauteils wird bzw. werden vorzugsweise der Strömungsquerschnitt und/oder die Strömungsführung im Zuströmbereich verändert.

Über eine Bewegung, insbesondere eine Verdrehung und/oder Verschiebung, des durchflussbegrenzenden Bauteils kann der Durchfluss bzw. Massenstrom stufenlos eingestellt werden. Ferner können Durchflusskennlinien dargestellt werden, die linear, progressiv oder degressiv verlaufen.

Das durchflussbegrenzende Bauteil kann beispielsweise als bewegliche Blende oder Klappe ausgebildet sein, über welche eine Bohrung im Ventilgehäuse oder eine Durchströmöffnung in einem weiteren durchflussbegrenzenden ganz oder teilweise freigebbar ist. Alternativ oder ergänzend kann das durchflussbegrenzende Bauteil mindestens eine durchflussbegrenzende Durchströmöffnung besitzen, die durch eine Verdrehung und/oder Verschiebung des Bauteils ganz oder teilweise freigebbar oder in Überdeckung mit mindestens einer durchflussbegrenzenden Durchströmöffnung eines weiteren durchflussbegrenzenden Bauteils bringbar ist.

Besonders bevorzugt werden mehrere durchflussbegrenzende Bauteile mit sich zumindest teilweise überdeckenden und/oder unterschiedlich großen Durchströmöffnungen in Strömungsrichtung des Gases hintereinander geschaltet. Die Einstellung des Durchflusses wird dann durch die Anzahl der durchflussbegrenzenden Bauteile und/oder deren Lage zueinander bewirkt. Die Lage der durchflussbegrenzenden Bauteile zueinander und damit der gemeinsame Überdeckungsbereich ihrer Durchströmöffnungen ist vorzugsweise durch eine Verdrehung und/oder Verschiebung eines durchflussbegrenzenden Bauteils gegenüber wenigstens einem weiteren durchflussbegrenzenden Bauteil veränderbar.

Werden mehrere durchflussbegrenzende Bauteile in den Zuströmbereich des Ventils eingesetzt, kann ein erstes durchflussbegrenzendes Bauteil bereits bei der Montage des Ventils in den Zuströmbereich eingesetzt werden, um beispielsweise eine Grobeinstellung vorzunehmen. Die Feineinstellung kann dann später durch Auswahl mindestens eines weiteren durchflussbegrenzenden Bauteils, das in den Zuströmbereich des Ventils eingesetzt wird, erfolgen.

Bevorzugte Ausführungsformen der Erfindung werden nachfolgend anhand der beigefügten Zeichnungen näher erläutert. Diese zeigen:
Fig. 1 einen schematischen Längsschnitt durch ein erfindungsgemäßes Ventil gemäß einer ersten bevorzugten Ausführungsform, das als axial anströmbares Ventil ausgebildet ist,
Fig. 2 einen schematischen Längsschnitt durch ein Ventil, das als radial anströmbares Ventil ausgebildet ist und nicht unter die vorliegende Erfindung fällt,
Fig. 3 und 4 jeweils eine schematische Darstellung der Abhängigkeit des Massenstroms vom jeweiligen Querschnitt der Durchströmöffnungen mehrerer hintereinander geschalteter durchflussbegrenzender Bauteile,
Fig. 5 einen schematischen Längsschnitt durch zwei hintereinander geschaltete scheibenförmige durchflussbegrenzende Bauteile für ein erfindungsgemäßes Ventil, deren Lage zueinander fest ist,
Fig. 6 einen schematischen Längsschnitt durch zwei hintereinandergeschaltete scheibenförmige durchflussbegrenzende Bauteile für ein erfindungsgemäßes Ventil, deren Lage zueinander variabel ist,
Fig. 7 eine schematische Draufsicht auf die Anordnung der Fig. 6,
Fig. 8 eine schematische Draufsicht auf eine modifizierte Anordnung zweier hintereinander geschalteter scheibenförmiger durchflussbegrenzender Bauteile, deren Lage zueinander variabel ist,
Fig. 9 eine schematische Seitenansicht einer Anordnung mit zwei ineinander geführten hülsenförmigen durchflussbegrenzenden Bauteilen,
Fig. 10 einen schematischen Querschnitt durch die Anordnung der Fig. 9,
Fig. 11 eine schematische Seitenansicht einer Abwandlung der Anordnung der Fig. 9,
Fig. 12 eine schematische Draufsicht auf eine weitere Abwandlung der Anordnung der Fig. 9,
Fig. 13 einen schematischen Längsschnitt durch einen Zuströmbereich in Form einer Bohrung mit hierin eingesetztem durchflussbegrenzenden Bauteil und
Fig. 14 ein Diagramm zur Darstellung verschiedener Durchflusskennlinien.

### Ausführliche Beschreibung der Zeichnungen

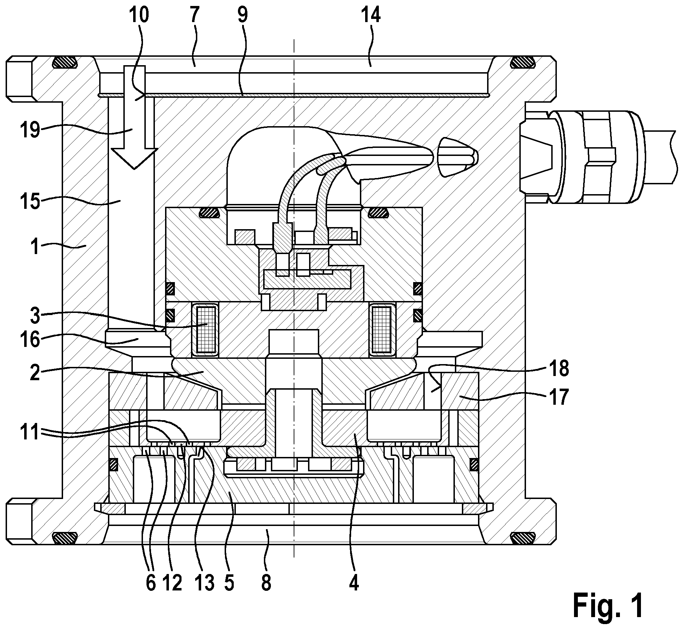

Das in der Fig. 1 dargestellte Ventil umfasst ein Ventilgehäuse 1, in dem ein Elektromagnet 3 zur Betätigung eines scheibenförmigen Ventilschließelements 4 aufgenommen ist. Der Elektromagnet 3 wirkt hierbei mit einem hubbeweglichen Anker 2 zusammen, der fest mit dem Ventilschließelement 4 verbunden ist. Das scheibenförmige Ventilschließelement 4 weist mehrere konzentrisch angeordnete, teilkreisförmige Durchströmöffnungen 11 auf, die von Stegen 12 zur Ausbildung von Dichtflächen 13 begrenzt werden. Zum Schließen des Ventils sind die Dichtflächen 13 in Überdeckung mit mehreren konzentrisch angeordneten und teilkreisförmigen Durchströmöffnungen 6 eines scheibenförmigen Ventilsitzelements 5 bringbar. Zum Öffnen wird das Ventilschließelement 4 angehoben, so dass über die Durchströmöffnungen 11 und 6 eine Verbindung eines Zuströmbereichs 7 mit einem Abströmbereich 8 hergestellt ist.

Das Ventil der Fig. 1 wird axial angeströmt. Vorliegend strömt das Gas in Offenstellung des Ventils von einer in einer Stirnfläche des Ventilgehäuses 1 vorgesehenen Ausnehmung 14 über einen seitlich angeordneten Strömungskanal 15 am Elektromagneten 3 vorbei in Richtung eines ringförmigen Ventilraums 16. Dieser ist von dem Ventilschließelement 4 durch eine Zwischenplatte 17 getrennt, in welcher Bohrungen 18 ausgebildet sind, um das Gas den Durchströmöffnungen 11 und 6 zuzuleiten. In die Ausnehmung 14 ist ein durchflussbegrenzendes Bauteil 9 eingesetzt, das in einem Überdeckungsbereich mit dem Strömungskanal 15 eine Durchströmöffnung 10 besitzt, deren Strömungsquerschnitt kleiner als der des Strömungskanals 15 ist. Die Gasströmung in den Strömungskanal 15 wird demnach durch das Bauteil 9 gedrosselt. Der Strömungsquerschnitt der Durchströmöffnung 10 des Bauteils 9 ist dabei derart gewählt, dass der Gasdurchfluss bei vollständig geöffnetem Ventil einem vorgegebenen Sollwert entspricht.

Die Anordnung des Bauteils 9 in der von außen zugänglichen stirnseitigen Ausnehmung 14 ermöglicht das Einsetzen des Bauteils 9 am Ende der Montagelinie, so dass vorab das Ventil vermessen werden kann, um dann auf der Grundlage der Messdaten die Einstellung des Durchflusses vorzunehmen. Auf diese Weise können bei der Einstellung auch etwaige fertigungs- und/oder montagebedingte Toleranzen berücksichtigt werden. Es versteht sich von selbst, dass nicht nur ein durchflussbegrenzendes Bauteil 9, sondern auch mehrere durchflussbegrenzende Bauteile 9 hintereinander in der Ausnehmung 14 angeordnet werden können, um beispielsweise eine Feineinstellung vorzunehmen.

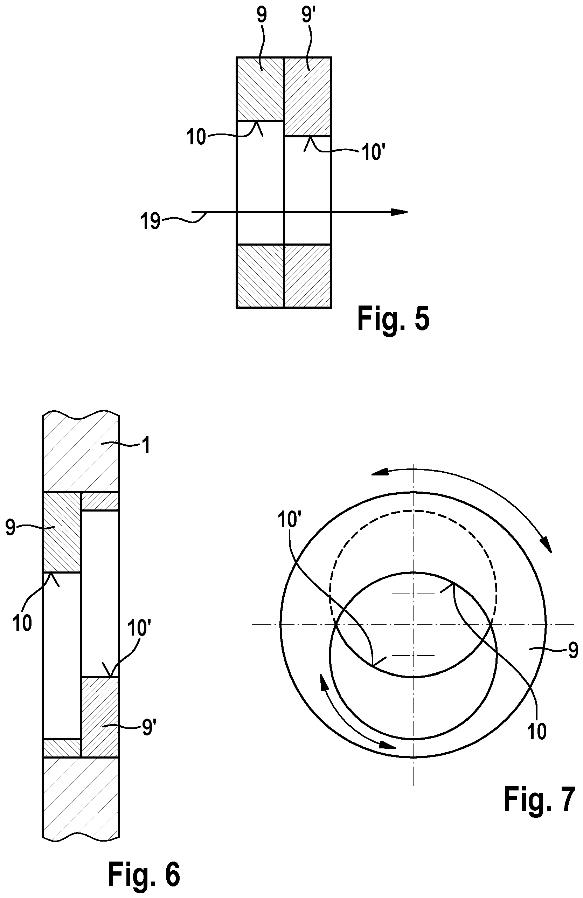

Zwei hintereinander geschaltete durchflussbegrenzende Bauteile 9, 9' mit unterschiedlichen Durchströmöffnungen 10, 10' sind beispielhaft in der Fig. 5 dargestellt. Die Anordnung erfolgt in der Weise, dass der Strömungsquerschnitt der Durchströmöffnungen 10, 10' in Strömungsrichtung 19 kleiner wird.

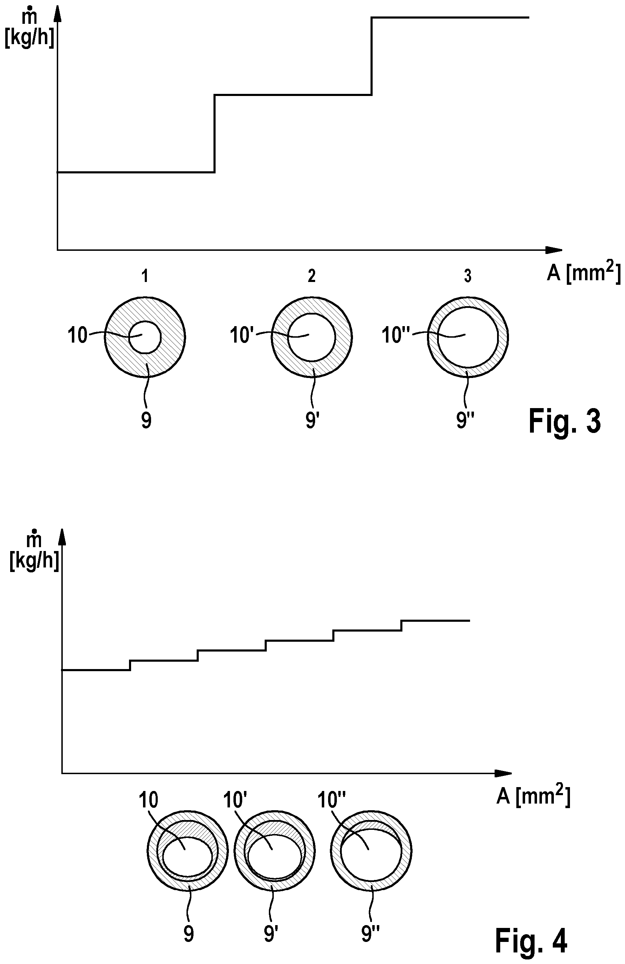

Durch mehrere hintereinander geschaltete durchflussbegrenzende Bauteile 9, 9', 9" können feinstufige Einstellungen (siehe Fig. 4) oder grobstufige Einstellungen (siehe Fig. 3) des Durchflusses vorgenommen werden, wobei jeweils ṁ für den Massenstrom und A für die Querschnittsfläche der Durchströmöffnungen 10, 10', 10" steht.

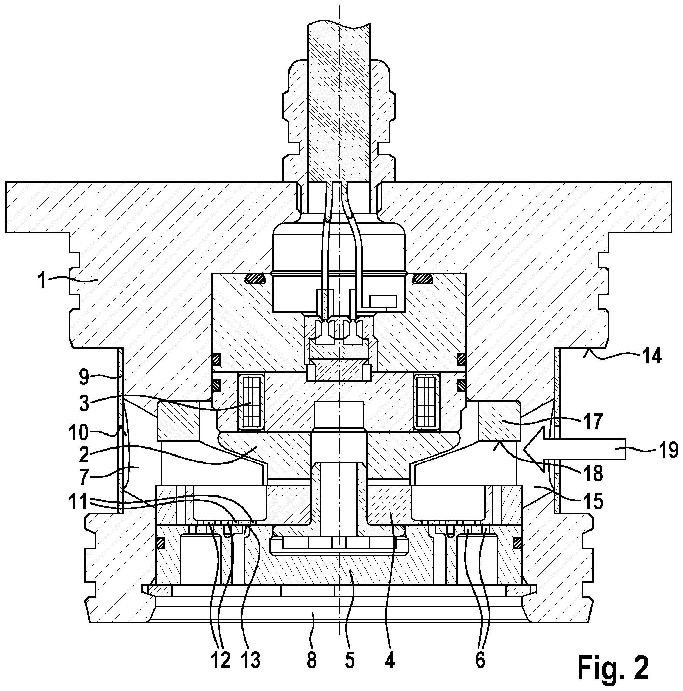

Ein weiteres Ventil ist in der Fig. 2 dargestellt, das nicht unter die vorliegende Erfindung fällt. Im Unterschied zur Ausführungsform der Fig. 1 wird dieses Ventil radial angeströmt. Das Ventilgehäuse 1 weist hierzu mehrere über den Umfang verteilt angeordnete, vorliegend schräg verlaufende Radialbohrungen als Strömungskanäle 15 auf, die alle in eine als umlaufende Ringnut ausgebildete Ausnehmung 14 des Ventilgehäuses 1 münden. Um das über die Ausnehmung 14 und die Strömungskanäle 15 zuströmende Gas den Durchströmöffnungen 11 im Ventilschließelement 4 zuzuführen, sind in der Zwischenplatte 17 radial verlaufende Bohrungen 18 ausgebildet, die derart angeordnet sind, dass sie die Strömungskanäle 15 überdecken. Zur Einstellung des Gasdurchflusses ist in die Ausnehmung 14 ein hülsenförmiges durchflussbegrenzendes Bauteil 9 mit durchflussbegrenzenden Durchströmöffnungen 10 in der Weise eingesetzt, dass die Durchströmöffnungen 10 des Bauteils 9 die im Ventilgehäuse 1 ausgebildeten Strömungskanäle 15 überdecken. Abweichend von der Darstellung der Fig. 2 können auch mehrere hülsenförmige durchflussbegrenzende Bauteile 9 in die Ausnehmung 14 eingesetzt werden.

Anstelle einer einzigen als Ringnut ausgebildeten Ausnehmung 14 können auch mehrere über den Umfang gleichmäßig verteilt angeordnete Ausnehmungen 14, jeweils im Bereich eines Strömungskanals 15, im Ventilgehäuse 1 vorgesehen sein, in welche jeweils mindestens ein scheibenförmiges durchflussbegrenzendes Bauteil 9 eingesetzt ist.

Werden mehrere scheibenförmige Bauteile 9, 9' mit mindestens einer durchflussbegrenzenden Durchströmöffnung 10, 10' in den Zuströmbereich 7 eines Ventils eingesetzt, können die Durchströmöffnungen 10, 10' jeweils derart im Bauteil 9, 9' angeordnet sein, dass über die Lage der Bauteile 9, 9' zueinander ein den Durchfluss bestimmender freier Strömungsquerschnitt vorgebbar ist. Ein entsprechendes Ausführungsbeispiel ist vereinfacht in der Fig. 6 dargestellt. Ist zudem wenigstens ein Bauteil 9, 9' drehbeweglich gelagert, kann durch eine Drehbewegung eines Bauteils 9, 9' der freie Strömungsquerschnitt variiert werden (siehe Fig. 7).

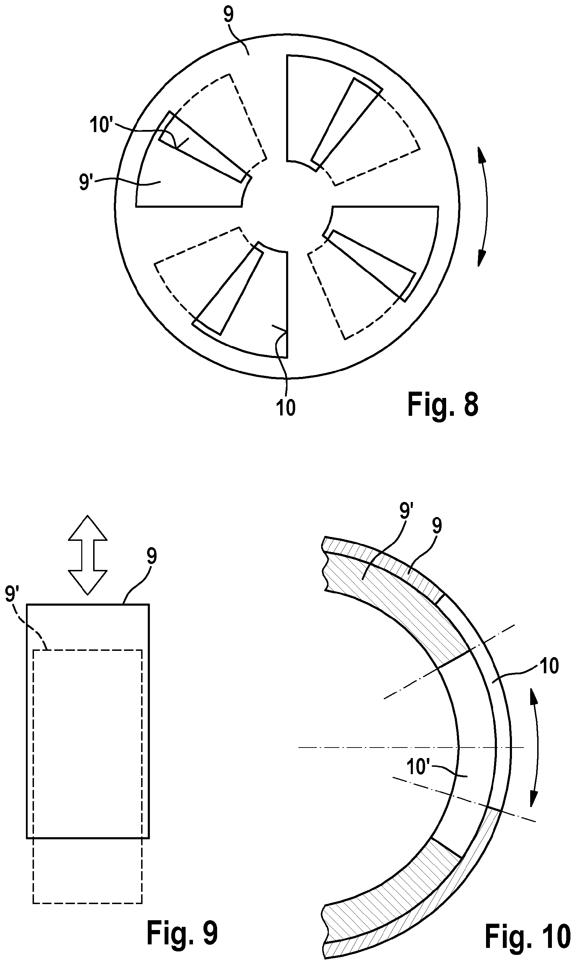

Eine leicht modifizierte Ausführungsform ist in der Fig. 8 dargestellt. Sie umfasst zwei hintereinander geschaltete durchflussbegrenzende Bauteile 9, 9', die jeweils mehrere segmentförmige Durchströmöffnungen 10, 10' besitzten, die durch eine Drehbewegung eines Bauteils 9 in Überdeckung bringbar sind.

Anstelle mehrerer hintereinander geschalteter scheibenförmiger Bauteile 9, 9' zur Durchflussbegrenzung können auch mehrere hülsenförmige Bauteile 9, 9'in den Zuströmbereich 7 eingesetzt werden, die hierzu bevorzugt ineinander geführt angeordnet sind. Über eine Verschiebung und/oder Verdrehung der hülsenförmigen durchflussbegrenzenden Bauteile 9, 9' zueinander kann dann der Durchfluss eingestellt werden. Ein entsprechendes Ausführungsbeispiel ist in den Fig. 9 und 10 dargestellt.

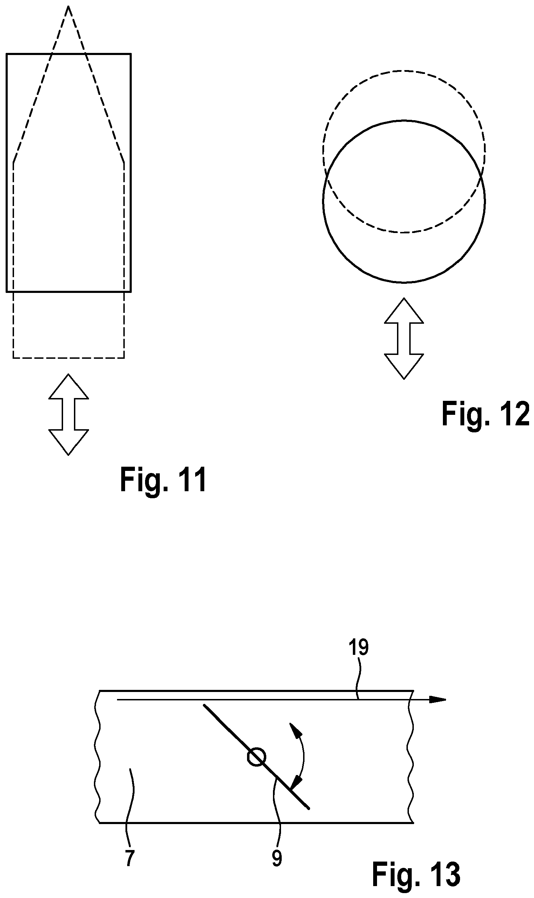

Abwandlungen von dem Ausführungsbeispiel der Fig. 9 und 10 sind in den Fig. 11 und 12 dargestellt. Bei dem Ausführungsbeispiel der Fig. 11 sind zwei hülsenförmige durchflussbegrenzende Bauteile 9, 9' ineinander geführt, wobei das zweite Bauteil 9' bereichsweise eine konisch geformte Außenkontur besitzt. Bei dem Ausführungsbeispiel der Fig. 12 sind die beiden hülsenförmigen durchflussbegrenzenden Bauteile 9, 9' hintereinander liegend angeordnet, so dass sie in radialer Richtung zueinander versetzbar sind.

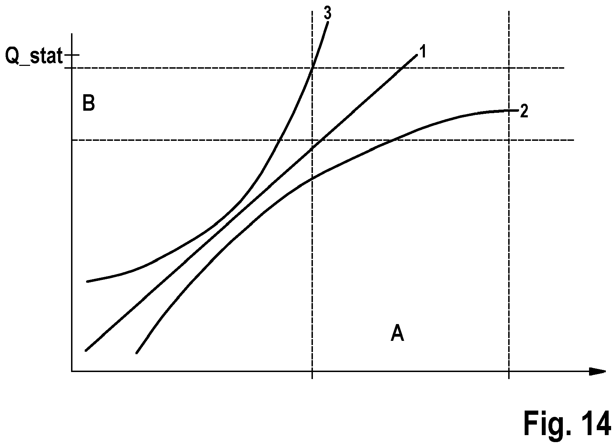

Die in den Fig. 11 und 12 dargestellten Ausführungsbeispiele zeigen insbesondere, dass die Kennlinie zur Darstellung des Durchflusses in Abhängigkeit vom freien Strömungsquerschnitt, der sich aus der Lage der Bauteile 9, 9' zueinander ergibt, nicht zwingend linear verlaufen muss. Das heißt, dass die Kennlinie auch progressiv oder degressiv verlaufen kann (siehe Fig. 14).

In der Fig. 13 ist darüber hinaus ein weiteres Ausführungsbeispiel dargestellt, das lediglich ein durchflussbegrenzendes Bauteil 9 umfasst. Dieses ist als drehbewegliche Klappe ausgebildet, wobei die Drehachse senkrecht zur Strömungsrichtung 19 des Gases verläuft (in den Ausführungsbeispielen der Fig. 7 bis 10 ist die Drehachse jeweils parallel zur Strömungsrichtung des Gases angeordnet).

Die Erfindung ist nicht auf die dargestellten Ausführungsformen beschränkt. Weitere Abwandlungen sind möglich, die sowohl die konkrete Ausgestaltung des Ventils, als auch eines durchflussbegrenzenden Bauteils 9 betreffen können.

## Patentansprüche

1. Elektromagnetisch betätigbares Ventil zum Eindosieren eines Gases, insbesondere zum Eindosieren eines gasförmigen Brennstoffs in einen Ansaugtrakt einer Verbrennungskraftmaschine, umfassend ein Ventilgehäuse (1), in dem ein mit einem hubbeweglichen Anker (2) zusammenwirkender Elektromagnet (3) zur Betätigung eines Ventilschließelements (4) aufgenommen ist, über dessen Hubbewegung mindestens eine in einem Ventilsitzelement (5) ausgebildete Durchströmöffnung (6) steuerbar ist,
die einen Zuströmbereich (7) des Ventilgehäuses (1) mit einem Abströmbereich (8) des Ventilgehäuses (1) verbindet, wobei im Zuströmbereich (7) mindestens ein durchflussbegrenzendes Bauteil (9) eingesetzt ist, wobei das Ventil axial, d.h. in Richtung der Hubbewegung des Ankers (2) und des Ventilschließelements (4), anströmbar ist und das mindestens eine durchflussbegrenzende Bauteil (9) in dem Zuströmbereich (7) stromaufwärts des Elektromagneten (3) angeordnet ist, wobei das Gas in Offenstellung des Ventils ausgehend vom Zuströmbereich (7) seitlich am Elektromagneten (3) vorbei in Richtung der Durchströmöffnung (6) strömt.

2. Ventil nach Anspruch 1,
**dadurch gekennzeichnet, dass** mindestens ein im Zuströmbereich (7) eingesetztes durchflussbegrenzendes Bauteil (9) beweglich, insbesondere drehbeweglich und/oder verschiebbar, gegenüber dem Ventilgehäuse (1) und/oder einem weiteren durchflussbegrenzenden Bauteil (9) gelagert ist.

3. Ventil nach Anspruch 1 oder 2,
**dadurch gekennzeichnet, dass** mindestens ein im Zuströmbereich (7) eingesetztes durchflussbegrenzendes Bauteil (9) als Blende oder Klappe ausgebildet ist.

4. Ventil nach einem der vorhergehenden Ansprüche,
**dadurch gekennzeichnet, dass** mindestens ein im Zuströmbereich (7) eingesetztes durchflussbegrenzendes Bauteil (9) hülsen- oder scheibenförmig ausgebildet ist und mindestens eine durchflussbegrenzende Durchströmöffnung (10) besitzt.

5. Ventil nach einem der vorhergehenden Ansprüche,
**dadurch gekennzeichnet, dass** mehrere durchflussbegrenzende Bauteile (9) mit sich zumindest teilweise überdeckenden und/oder unterschiedlich großen Durchströmöffnungen (10) in Strömungsrichtung des Gases hintereinander geschaltet sind, wobei vorzugsweise die durchflussbegrenzenden Bauteile (9) jeweils scheibenförmig ausgebildet sind.

6. Ventil nach einem der vorhergehenden Ansprüche,
**dadurch gekennzeichnet, dass** das Ventilsitzelement (5) zur Ausbildung eines Flachsitzes scheibenförmig ausgebildet ist und mehrere konzentrisch angeordnete, kreis- oder teilkreisförmige Durchströmöffnungen (6) besitzt.

7. Ventil nach einem der vorhergehenden Ansprüche,
**dadurch gekennzeichnet, dass** das Ventilschließelement (4) scheibenförmig ausgebildet ist und mehrere konzentrisch angeordnete, kreis- oder teilkreisförmig angeordnete Durchströmöffnungen (11) besitzt, die durch Stege (12) begrenzt werden, die Dichtflächen (13) ausbilden, die in Überdeckung mit den Durchströmöffnungen (6) des Ventilsitzelements (5) bringbar sind.

8. Verfahren zur Herstellung eines Ventils nach einem der vorhergehenden Ansprüche, umfassend die Schritte:
- Montage des Ventils,
- Vermessung des Ventils unter definierten Bedingungen zur Erfassung des Durchflusses,
- Auswertung der Messdaten und
- Auswahl mindestens eines durchflussbegrenzenden Bauteils (9), das zur Einstellung des Durchflusses auf einen Sollwert in den Zuströmbereich (7) des Ventils eingesetzt wird.

9. Verfahren nach Anspruch 8,
**dadurch gekennzeichnet, dass** die Auswahl mindestens eines durchflussbegrenzenden Bauteils (9) anhand zumindest einer vorab bestimmten Durchflusskennlinie und/oder aus einer Vielzahl vorgefertigter und klassierter Bauteile (9) getroffen wird.

10. Verfahren nach Anspruch 8 oder 9,
**dadurch gekennzeichnet, dass** zur Grobeinstellung des Durchflusses mindestens ein durchflussbegrenzendes Bauteil (9) in den Zuströmbereich (7) des Ventils eingesetzt wird, das dann zur Feineinstellung des Durchflusses gegenüber dem Ventilgehäuse (1) und/oder gegenüber einem weiteren durchflussbegrenzenden Bauteil (9) bewegt, insbesondere verdreht und/oder verschoben, wird.

11. Verfahren nach einem der Ansprüche 8 bis 10,
**dadurch gekennzeichnet, dass** mehrere durchflussbegrenzende Bauteile (9) mit sich zumindest teilweise überdeckenden und/oder unterschiedlich großen Durchströmöffnungen (10) in Strömungsrichtung des Gases hintereinander geschaltet werden und die Einstellung des Durchflusses durch die Anzahl der Bauteile (9) und/oder deren Lage zueinander bewirkt wird.

## Claims

1. Electromagnetically actuable valve for dosing a gas, in particular for dosing a gaseous fuel into an intake tract of an internal combustion engine, comprising a valve housing (1) in which an electromagnet (3) interacting with an armature (2), which is able to perform stroke movements, and serving for actuating a valve closure element (4) is accommodated, at least one throughflow opening (6), which is formed in a valve seat element (5) and connects an inflow region (7) of the valve housing (1) to an outflow region (8) of the valve housing (1), being controllable via the stroke movement of said valve closure element, wherein, in the inflow region (7), at least one throughflow-limiting component (9) is inserted, wherein the valve is able to be flowed into axially, that is to say in the direction of the stroke movement of the armature (2) and of the valve closure element (4), and the at least one throughflow-limiting component (9) in the inflow region (7) is arranged upstream of the electromagnet (3), wherein the gas, in the open position of the valve, flows from the inflow region (7) laterally past the electromagnet (3) in the direction of the throughflow opening (6).

2. Valve according to Claim 1,
**characterized in that** at least one throughflow-limiting component (9) inserted in the inflow region (7) is mounted so as to be movable, in particular rotationally movable and/or displaceable, with respect to the valve housing (1) and/or a further throughflow-limiting component (9).

3. Valve according to Claim 1 or 2,
**characterized in that** at least one throughflow-limiting component (9) inserted in the inflow region (7) is in the form of an orifice plate or flap.

4. Valve according to one of the preceding claims,
**characterized in that** at least one throughflow-limiting component (9) inserted in the inflow region (7) is of sleeve- or disc-shaped form and has at least one throughflow-limiting throughflow opening (10).

5. Valve according to one of the preceding claims,
**characterized in that** multiple throughflow-limiting components (9) having at least partially overlapping and/or differently sized throughflow openings (10) are arranged one behind the other in the flow direction of the gas, wherein preferably the throughflow-limiting components (9) are each of disc-shaped form.

6. Valve according to one of the preceding claims,
**characterized in that** the valve seat element (5), for forming a flat seat, is of disc-shaped form and has multiple concentrically arranged circular or part-circular throughflow openings (6).

7. Valve according to one of the preceding claims,
**characterized in that** the valve closure element (4) is of disc-shaped form and has multiple concentrically arranged throughflow openings (11) which are arranged in a circular or part-circular manner and which are delimited by webs (12) forming sealing surfaces (13) which are able to be brought into overlap with the throughflow openings (6) of the valve seat element (5).

8. Method for producing a valve according to one of the preceding claims, comprising the steps of:
- assembling the valve,
- performing a measurement at the valve under defined conditions for the purpose of detecting the throughflow,
- evaluating the measurement data, and
- selecting at least one throughflow-limiting component (9) which, for the purpose of setting the throughflow to a target value, is inserted into the inflow region (7) of the valve.

9. Method according to Claim 8,
**characterized in that** at least one throughflow-limiting component (9) is selected on the basis of at least one throughflow characteristic curve determined beforehand and/or from a multiplicity of pre-fabricated and classified components (9).

10. Method according to Claim 8 or 9,
**characterized in that**, for the coarse setting of the throughflow, at least one throughflow-limiting component (9) is inserted into the inflow region (7) of the valve, which at least one throughflow-limiting component, for the fine setting of the throughflow, is then moved, in particular rotated and/or displaced, with respect to the valve housing (1) and/or with respect to a further throughflow-limiting component (9).

11. Method according to one of Claims 8 to 10,
**characterized in that** multiple throughflow-limiting components (9) having at least partially overlapping and/or differently sized throughflow openings (10) are arranged one behind the other in the flow direction of the gas, and the setting of the throughflow is brought about by the number of the components (9) and/or by their position with respect to one another.

## Revendications

1. Soupape actionnable de manière électromagnétique destinée au dosage d'un gaz, en particulier au dosage d'un carburant gazeux dans un système d'admission d'un moteur à combustion interne, comprenant un boîtier de soupape (1), dans lequel est logé un électroaimant (3) coopérant avec un induit (2) déplaçable en mouvement alternatif pour actionner un élément de fermeture de soupape (4), dont le mouvement alternatif permet de commander au moins une ouverture de passage (6) formée dans un élément de siège de soupape (5), qui relie une zone d'arrivée (7) du boîtier de soupape (1) à une zone d'évacuation (8) du boîtier de soupape (1), dans laquelle au moins une pièce limitant le débit (9) est insérée dans la zone d'arrivée (7), dans laquelle la soupape peut être abordée axialement, c'est-à-dire dans la direction du mouvement alternatif de l'induit (2) et de l'élément de fermeture de soupape (4) et ladite au moins une pièce limitant le débit (9) dans la zone d'arrivée (7) est disposée en amont de l'électroaimant (3), dans laquelle le gaz s'écoule dans la position ouverte de la soupape depuis la zone d'arrivée (7) latéralement le long de l'électroaimant (3) en direction de l'ouverture de passage (6).

2. Soupape selon la revendication 1, **caractérisée en ce qu'**au moins une pièce limitant le débit (9) insérée dans la zone d'arrivée (7) est montée de façon mobile, en particulier de façon mobile en rotation et/ou en translation, par rapport au boîtier de soupape (1) et/ou par rapport à une autre pièce limitant le débit (9).

3. Soupape selon la revendication 1 ou 2, **caractérisée en ce qu'**au moins une pièce limitant le débit (9) insérée dans la zone d'arrivée (7) est formée par un diaphragme ou un clapet.

4. Soupape selon l'une quelconque des revendications précédentes, **caractérisée en ce qu'**au moins une pièce limitant le débit (9) insérée dans la zone d'arrivée (7) est réalisée en forme de douille ou de rondelle et possède au moins une ouverture de passage limitant le débit (10).

5. Soupape selon l'une quelconque des revendications précédentes, **caractérisée en ce que** plusieurs pièces limitant le débit (9) avec des ouvertures de passage (10) se recouvrant au moins partiellement et/ou ayant des grandeurs différentes sont installées l'une derrière l'autre dans la direction d'écoulement du gaz, dans laquelle les pièces limitant le débit (9) sont de préférence réalisées respectivement en forme de rondelle.

6. Soupape selon l'une quelconque des revendications précédentes, **caractérisée en ce que** l'élément de siège de soupape (5) est réalisé en forme de rondelle pour former un siège plat et possède plusieurs ouvertures de passage (6) circulaires ou partiellement circulaires disposées de façon concentrique.

7. Soupape selon l'une quelconque des revendications précédentes, **caractérisée en ce que** l'élément de fermeture de soupape (4) est réalisé en forme de rondelle et possède plusieurs ouvertures de passage (11) disposées sous forme circulaire ou partiellement circulaire, de façon concentrique, qui sont limitées par des nervures (12), qui forment des faces d'étanchéité (13), qui peuvent être mises en position de recouvrement avec les ouvertures de passage (6) de l'élément de siège de soupape (5).

8. Procédé de fabrication d'une soupape selon l'une quelconque des revendications précédentes, comprenant les étapes suivantes:
- montage de la soupape,
- mesure de la soupape dans des conditions définies pour détecter le débit,
- évaluation des valeurs de mesure, et
- sélection d'au moins une pièce limitant le débit (9), qui est insérée dans la zone d'arrivée (7) de la soupape pour le réglage du débit à une valeur de consigne.

9. Procédé selon la revendication 8, **caractérisé en ce que** l'on procède à la sélection d'au moins une pièce limitant le débit (9) à l'aide d'au moins une courbe caractéristique du débit déterminée au préalable et/ou parmi une multiplicité de pièces préfabriquées et classées (9).

10. Procédé selon la revendication 8 ou 9, **caractérisé en ce que** l'on insère au moins une pièce limitant le débit (9) dans la zone d'arrivée (7) de la soupape pour un réglage grossier du débit, et on la déplace ensuite, en particulier par rotation et/ou translation, par rapport au boîtier de soupape (1) et/ou par rapport à une autre pièce limitant le débit (9), pour le réglage fin du débit.

11. Procédé selon l'une quelconque des revendications 8 à 10, **caractérisé en ce que** l'on installe plusieurs pièces limitant le débit (9) avec des ouvertures de passage (10) se recouvrant au moins partiellement et/ou ayant des grandeurs différentes l'une derrière l'autre dans la direction d'écoulement du gaz et on opère le réglage du débit par le nombre des pièces (9) et/ou leur position l'une par rapport à l'autre.
